# EUROPEAN PATENT APPLICATION

(11) **EP 3 582 048 A1**
(43) Date of publication of application: **18.12.2019**
(21) Application number: 18193190.8
(22) Date of filing: 07.09.2018
(51) Int. Cl.: G05B 19/4093, G05B 19/4097, G05B 19/4099

(54) **MACHINING BASED ON STRATEGIES SELECTED BASED ON PRIORITIZED ASPECTS OF MANUFACTURING**

(30) Priority: 14.06.2018 EP 18177834
(71) Applicant: Sandvik Machining Solutions AB, 811 81 Sandviken (SE)
(72) Inventor: NORDELL, Hugo, 129 36 Hägersten (SE); BRANDT, Daniel, 393 65 .Kalmar (SE); WEDLUND, Daniel, 811 36 .Sandviken (SE)
(74) Representative: Sandvik

(57) **Abstract**

The present invention relates to a method comprising receiving (210) user input indicative of prioritized aspects of manufacturing of an object, the prioritized aspects comprising tool life or surface quality or object manufacturing speed; obtaining (220) a model of an object to be manufactured via subtractive manufacturing; identifying (230), based on the model, a geometric feature to be machined as part of manufacturing the object; obtaining (240) a plurality of strategies for machining the geometric feature (310, 320, 330), by accessing a database, the plurality of strategies defining alternative ways of machining the geometric feature; selecting (250) at least one strategy from said plurality of strategies by ranking the plurality of strategies using the prioritized aspects of manufacturing and selecting at least one strategy having the highest ranking, providing, (260) based on the at least one selected strategy, instructions for causing the one or more machine tools (110) to manufacture the object via subtractive manufacturing.

## Description

### TECHNICAL FIELD

The present disclosure generally relates to machining, and in particular to process planning for machining operations for subtractive manufacturing.

### BACKGROUND

Computer-aided design (CAD) models or three dimensional, 3D, models are often employed to define objects to be manufactured. Tolerances and other requirements for the objects to be manufactured may also be obtained via product and manufacturing information (PMI). The manufacturing may be performed via machining operations performed by one or more machine tools. A cutting tool mounted in the machine tool is moved by the machine tool relative to a work piece, so that the cutting tool cuts away material from the work piece to form one or more geometric feature of the object to be manufactured.

Computer-aided manufacturing (CAM) is typically employed to decide how to manufacture the object defined by the CAD model. This is a complicated task involving many factors/parameters such as selecting machine tools, operation sequences (for example involving roughing, semi-finishing and finishing), operation strategies, fixtures for holding the work piece, cutting tools, tool paths, and cutting data (such as feed rate, cutting speed, and depth of cut). These factors/parameters affect aspects of manufacturing such as tool life, quality of the object and manufacturing speed of object.

Hence, CAM programmers often need plenty of time and experience for making suitable tradeoffs between tool life, quality of the object and manufacturing speed of object, so as to reach a suitable solution to this complicated task. Modern CAM software may include some elements of automation for assisting CAM programmers, but CAM programmers still need to rely on experience as well as trial and error to actually reach a suitable solution. This typically involves repeatedly defining a candidate set of factors/parameters and evaluating them in manufacturing simulations, which is both cumbersome and time consuming.

Computer numerically controlled (CNC) machine tools are typically employed for the manufacturing. Post-processing is employed to convert the result of the CAM programming into instructions or machine code executable by the control system of the CNC machine tool, in which the object is to be manufactured, causing the machine tool to manufacture the object. Machine operators (or CNC operators) often adapt or modify the machine code based on their own knowledge and experience of the machine tool. Preferences in aspects of manufacturing such as tool life, quality of the object and manufacturing speed of object may for example lead the machine operator to modify the machine code. The machine operator may e.g. modify cutting tool, tool path pattern and cutting data.

Machine operators still need to rely on experience as well as trial and error to actually reach a suitable machine code. This typically involves repeatedly defining a candidate machine code and evaluating the code in manufacturing simulations, which is both cumbersome and time consuming.

It may also be necessary to modify the machine code to make corrections for mistakes made in the CAM programming. CNC operators may need plenty of time and/or experience for making appropriate modifications of the machine code.

Moreover, test runs are often employed to check that the machine code actually causes the machine to perform as expected. Computer simulations may also be performed to detect potential problems. Test runs and/or simulations may for example incur extra costs and/or cause delays.

It would be desirable to provide new ways to address one or more of the abovementioned issues.

### OBJECTS OF THE INVENTION

An objective of embodiments of the present invention is to provide a solution which mitigates or solves the drawbacks described above.

### SUMMARY OF THE INVENTION

The above objective is achieved by the subject matter described herein. Further advantageous implementation forms of the invention are described herein.

According to a first aspect of the invention the objects of the invention is achieved by a method comprising receiving user input indicative of prioritized aspects of manufacturing of an object, the prioritized aspects comprising tool life or surface quality or object manufacturing speed; obtaining a model of an object to be manufactured via subtractive manufacturing; identifying, based on the model, a geometric feature to be machined as part of manufacturing the object; obtaining a plurality of strategies for machining the geometric feature, by accessing a database, the plurality of strategies defining alternative ways of machining the geometric feature; selecting at least one strategy from said plurality of strategies by ranking the plurality of strategies using the prioritized aspects of manufacturing and selecting at least one strategy having the highest ranking, providing, based on the at least one selected strategy, instructions for causing the one or more machine tools to manufacture the object via subtractive manufacturing.

At least one advantage of this aspect is that complexity of manufacturing is reduced by presenting a plurality of selected and/or proposed strategies for how to machine an identified geometric feature of the object, thereby reducing a very complicated manufacturing process planning task into a selection between one or more selected strategies. A further advantage of the present disclosure is that complexity of manufacturing can be reduced.

According to a second aspect of the invention the objects of the invention is achieved by an object manufacturing system configured to perform the method according to the first aspect.

According to a third aspect of the invention the objects of the invention is achieved by a computer program comprising computer-executable instructions for causing a system, when the computer-executable instructions are executed on a processing unit comprised in the system, to perform any of the method steps according to the first aspect.

The advantages of the second and third aspects are at least the same as for the first aspect.

It is noted that embodiments of the present disclosure relate to all possible combinations of features recited in the claims. The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

**Fig. 1** is a schematic overview of an example machining site and associated equipment.
**Fig. 2** is a flow chart of a method for generating instructions for causing one or more machine tools to manufacture an object according to one or more embodiments described herein.
**Fig. 3** shows perspective views of example geometric features for which strategies may be stored in a database.
**Fig. 4****.** shows two different example tool path patterns for machining the same geometric feature.
**Fig. 5****.** shows a flow chart of how a user may interact with a tablet computer for generating instructions for causing one or more machine tools to manufacture an object according to one or more embodiments described herein.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

### DETAILED DESCRIPTION

In the present disclosure the term tool life denotes aspects that affect cutting tool or machine tool expected lifetime. In one example, a longer tool life for a cutting tool can be expected by selecting a small depth of cut and a shorter tool life can be expected by selecting a large depth of cut.

In the present disclosure the term surface quality denotes manufacturing quality of a geometric feature of an object. In one example, this may be shape accuracy and/or geometric dimensions and/or surface finish tolerances, e.g. defined by product and manufacturing information.

In the present disclosure the term surface manufacturing speed denotes aspects that affect productivity when manufacturing the object, such as speed of manufacturing or time of manufacturing. In one example, a lower manufacturing speed can be expected by selecting a small depth of cut and a higher manufacturing speed can be expected by selecting a large depth of cut.

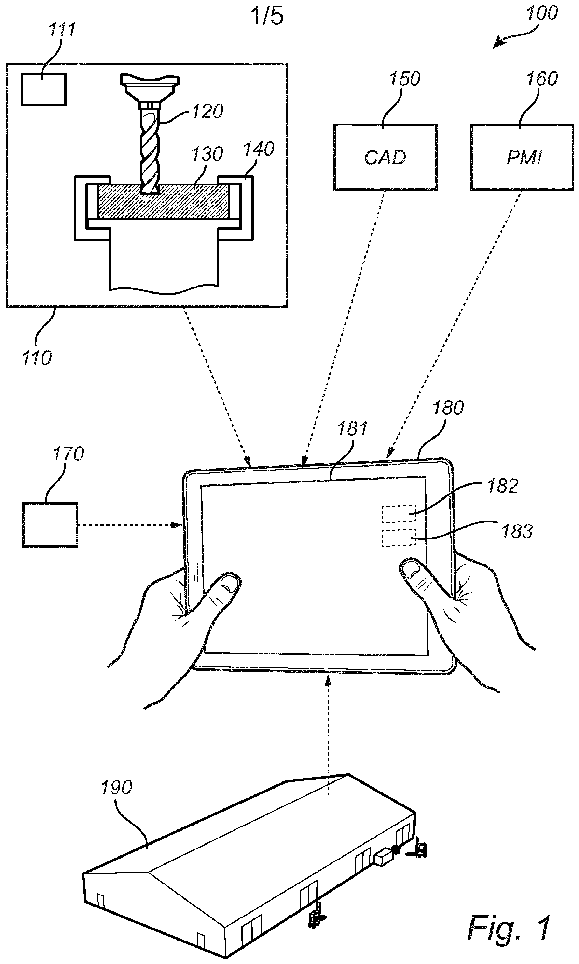

**Fig. 1** is a schematic overview of a machining site 100 and associated equipment. One or more machine tools 110 are arranged at the machining site 100 for performing subtractive manufacturing. The machine tools 110 may for example be adapted for metal cutting. The machine tools 110 may be adapted to perform machining operations, for example metal cutting operations, such as drilling, milling, turning, reaming, or threading. The machining operations are typically performed using cutting tools 120 available at the machining site 100 or at a remote location such a warehouse 190. A system 180 may further be located at the machining site 100, e.g. in the form of a stationary or laptop computer, a tablet computer or a smart phone, equipped with suitable software. The system 180 may comprise a user interface 181 for user interaction, one or more processors 182 and a machine code generator 183. The system may be configured to read or load models 150 and product and manufacturing information (PMI) 160, e.g. from a database 170.

A database 170 communicatively coupled to the system 180 and including e.g. a machine tool database and/or cutting tool database and/or a strategy database and/or a model database and/or a PMI database may for example be employed to keep track of the available machine tools 110. The database may be implemented in local memory of the system or as network based storage, e.g. a server or virtual/cloud server storage.

One or more cutting tools 120 are available for use by the machine tools 110 to perform machining operations, where the one or more cutting tools 120 moves relative to a work piece 130 for cutting away material from the work piece 130 to manufacture an object or geometric features of the object. The work piece 130 is made from a material known to the system 180. The database 170 may further include a work piece database and may for example be employed to keep track of the available or recommended/proposed work pieces 130.

Cutting tools 120, available for use by a machine tool 110, may for example be arranged in a tool magazine (not shown) from which the cutting tools 120 may be fed into position in the machine tool 120 to replace the previously used cutting tool 120. The cutting tools 120 may for example be replaced by a robotic arrangement or may be replaced manually. As previously mentioned, the database 170 may further include a cutting tool database and may for example be employed to keep track of the available or recommended/proposed cutting tools 120.

The cutting tools 120 may include general purpose cutting tools as well as cutting tools specifically adapted for cutting in certain materials or for cutting certain shapes. Some of the cutting tools 120 may be solid cutting tools formed in a single piece of material such as steel or cemented carbide. Some of the cutting tools 120 may consist of multiple pieces fitted together to form the cutting tool. Some of the cutting tools 120 may for example be equipped with replaceable cutting inserts (not shown). The cutting inserts may for example comprise cemented carbide or ceramic material, and may for example be provided with various coatings for meeting user requirements. The coatings may for example be adapted for cutting in certain materials, and/or may be adapted for improving heat resistance and/or wear resistance.

One or more fixtures 140 are available for holding the work piece 130 in position during the machining. Fixtures 140 available for use by a machine tool 110 may for example be stored in a vicinity of the machine tool 110 so that the fixtures 140 may be retrieved when needed to replace the currently employed fixture 140. The fixtures 140 may for example be replaced by a robotic arrangement or may be replaced manually. The database 170 may further include a fixture database and may for example be employed to keep track of the available or recommended/proposed fixtures 140. It will be appreciated that the fixture 140 depicted in Fig. 1 is an example, and that many other types of fixtures may be envisaged.

The machine tools 110 may be equipped with cooling systems (not shown) for providing cooling during machining. The cooling may for example be provided via a cooling fluid.

The machine tools 110 are equipped with control systems 111 for controlling the machine tools 110. The control system 111 of a machine tool may for example control servos of the machine tool 110 for moving the cutting tool 120 relative to the work piece 130. In some machine tools 110, the control system 111 may cause both the cutting tool 120 and the work piece 130 to move. The machine tools 110 may for example be computer numerically controlled (CNC) machine tools 110, and the control system 111 may be adapted to execute CNC code or machine code.

An object to be manufactured may be defined by a model 150, such as a three-dimensional CAD model 150. The model may be stored in the model database, e.g. comprised in the database 170. Tolerances for the object regarding surface quality such as shape accuracy, geometric dimensions and/or surface finish may be specified via product and manufacturing information (PMI) 160. The PMI 160 may also specify the material of the work piece 130 to be employed to manufacture the object.

For the machine tools 110 to be able to manufacture the object in accordance with the model 150 and the PMI 160, appropriate instructions or machine code needs to be generated for the control systems 111 of the machine tools 110.

Generation of such instructions or machine code or CNC code is a complicated task involving selection of for example operation sequences (for example in which order to perform different operation steps such as facing, hole making, and threading), machine tools 110, cutting tools 120, fixtures 140, tool paths and cutting data (such as feed rate, cutting speed, and depth of cut).

These factors affect aspects of manufacturing such as the quality and precision of the manufactured object, and may also affect the manufacturing time/speed and/or wear on the cutting tools or tool life. Hence, generation of suitable instructions for the control system 111 usually involves plenty of trial and error, even for experienced users or machine operators.

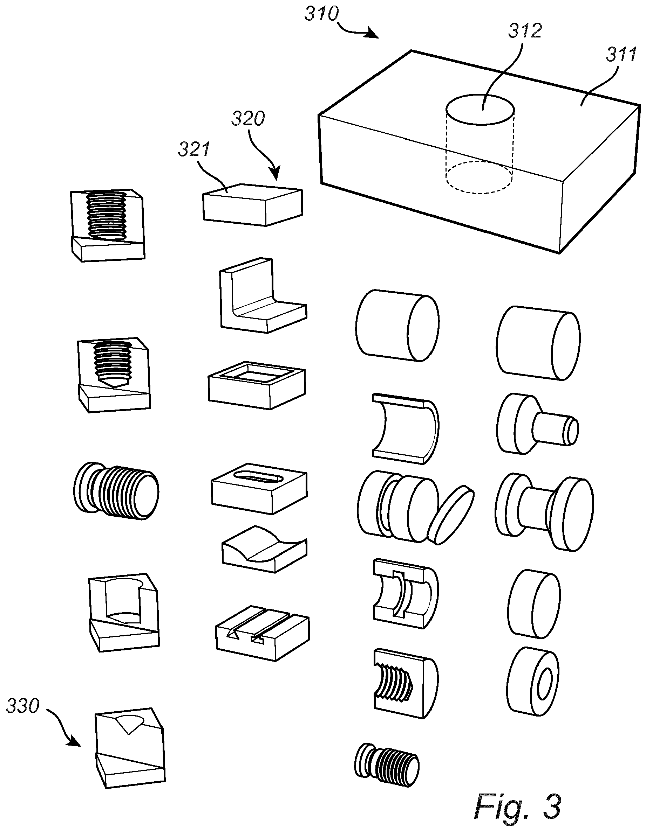

However, persons knowledgeable in the field of subtractive manufacturing, and companies with extensive experience in developing cutting tools, have collected plenty of knowledge over time regarding how to machine objects and/or different geometric features of the objects. As this disclosure shows, this knowledge may be codified and stored as strategies in a strategy database, e.g. comprised in the database 170. The database 170 includes strategies indicative of defining alternative ways of machining geometric features, as further described in relation to Fig. 3.

**Fig. 3** shows perspective views of example geometric features for which associated strategies are included in the database 170. The geometric features covered by the database may for example include a collection of common features which may have relatively simple geometries. The geometric features covered by the database 170 may also include more complicated features having several sub-features such as holes or threads. Even strategies indicative of quite complicated features may be included in the database 170.

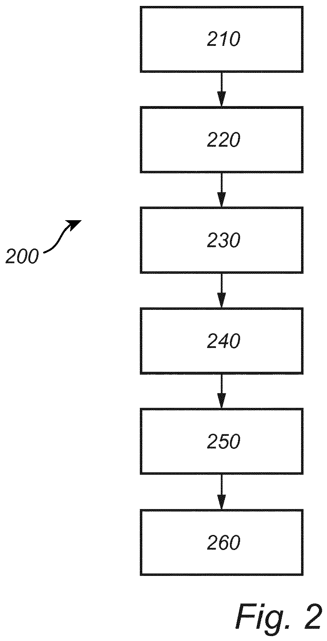

For a given object to be manufactured, geometric features to be machined as part of manufacturing the object may first be identified, as further described in relation to Fig. 2. The database 170 may then be employed to search for and find strategies for machining the identified geometric features. The database may be searched for all strategies indicative of ways to manufacture an identified geometric feature of the object or a subset of strategies indicative of ways to manufacture an identified geometric feature delimited by constraints. The constraints may be based on a selected machine tool and/or a selected tool-assembly/cutting tool and/or a selected work piece 130 and/or a selected fixture 140 and/or a selected machining process and-or a selected tool path and/or selected cutting data parameters. In other words, the user of the system 180 may choose to limit the search of suitable strategies based on the above mentioned constraints.

Although strategies for many geometric features may have been stored in the database 170, there may of course be some features lacking entries in the database 170. The database 170 may therefore be built up over time to cover even more geometric feature (or shapes) as new strategies are figured out by people in the technical field.

For at least some geometric features, the database 170 includes a plurality of strategies defining different ways of machining the same geometric feature. Strategies may therefore be selected from the database based on the current circumstances.

Fig. 3 further shows an object 310 having several flat surfaces and a hole 312 with an opening in the top surface 311. In a first example of an identified geometric feature to be machined, the geometric feature may consist of the upper flat surface 311 and the hole 312. In other words, the first example geometric feature has two sub-features 311 and 312. A second example geometric feature is the flat upper surface 321 of the object 320 shown in Fig. 3.

In a first strategy for machining the geometric feature of the first example, the hole 312 is machined first, and the surface 311 is machined afterwards. Forming the surface 311 after drilling the hole 312 (as in the first strategy) may cause deformation in the hole 312 close to the surface 311.

In a second strategy, the surface 311 is machined first, and the hole 312 is machined afterwards. Drilling of the hole 312 after forming the surface 311 (as in the second strategy) may cause deformations (or damage) at the surface 311 close to where the drill enters the hole 312.

Whether the deformations caused by the respective strategies are acceptable or preferred may depend on prioritized aspects of manufacturing of the object, such as tool life or surface quality or object manufacturing speed. The surface quality may e.g. be defined by the tolerances specified for the object to be manufactured in PMI, but also on the cutting tools available for performing the machining. Some drills may for example cause more deformations to the surface 311 than others, so that an additional machining operation is required to remove the deformations caused by the drilling. In such cases, the first strategy (machining the hole 312 first) may be preferred to the second strategy (machining the surface 311 first). It is therefore desirable to select a suitable strategy based on the user's preferences or tradeoff between tool life, surface quality or object manufacturing speed.

Another factor that may affect the selection between the first and second strategies is bending of the drill employed to make the hole 312, which may affect precision or quality of the object. Machining of the surface 311 first reduces the depth of the hole 312 to be drilled, which may affect how much the drill may bend.

Further, if the available drills are short, it may be desirable to employ the second strategy (machining the surface 311 first), since machining of the surface 311 first reduces the depth of the hole 312 to be drilled so that the drill reaches far enough to make the hole.

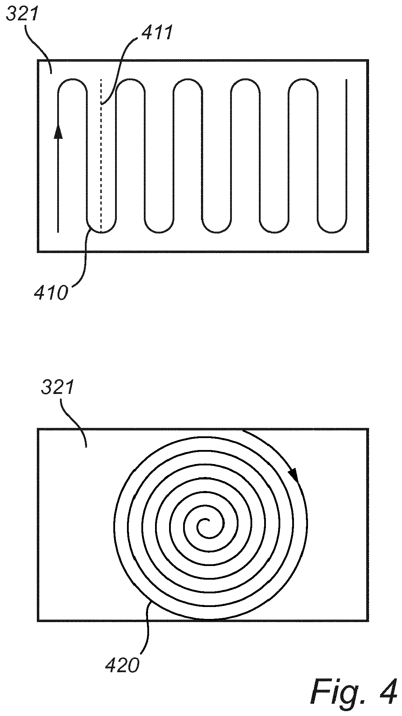

**Fig. 4** shows two different example tool path patterns, e.g. for machining the geometric feature 321. Fig. 4 shows the first example feature 321 from above. A first strategy for machining the feature 321 employs a tool path that passes back and forth across the surface 321 to form a first tool path pattern 410. A second strategy for machining the feature 321 employs a tool path that spirals inwards towards the center of the surface 320 to form a second tool path pattern 420.

It will be appreciated that the tool path patterns shown in Fig. 4 are schematic, and that the spiral-shaped tool path pattern 420 may for example be larger so that it covers the entire surface 321.

The first tool path pattern 410 is rather simple and convenient to use. However, the fact that the cutting tool moves back and forth means that it passes the area along the dotted line 411 in different directions at the respective sides of the line 411, which may cause undesired roughness or uneven areas along the dotted line 411 when certain cutting tools are employed. The selected strategy may also have a negative influence on tool life or may in some cases cause tool breakage. These aspects may be indicated or described in strategy characteristics associated to or comprised in strategies stored in the database 170.

The second tool path pattern 420 allows the cutting tool to perform cutting in a more uniform way along the tool path (compared to the first tool path pattern 410 where the cutting tool may pass in and out of cut). The second tool path pattern 420 does not suffer from the potential problems associated with the first tool path pattern 410, and may therefore be preferable for some cutting tools. These aspects may be indicated or described in strategy characteristics associated to or comprised in strategies stored in the database 170.

Note that the number of passes back and forth over the surface 321 in the first tool path pattern 410 may be adapted based on the size of the available cutting tool. If a milling cutter with small diameter is employed, then a large number of passes may be needed. If a milling cutter with larger diameter is employed, then a smaller number of passes may be employed. This may for example affect the manufacturing time and/or tool wear.

The example strategies described above with reference to Figs. 3 and 4 are relatively simple since they relate to relatively simple shapes 310 and 320. It will be appreciated that strategies for machining more complicated features (such as the example feature 330 shown in Fig. 3) are typically more complicated. The skilled person realizes that strategies for machining more complicated geometric features may for example involve several different machining operations using different cutting tools and several different tool path patterns. Machining of some geometric features may for example include steps such as roughing, semi-finishing and finishing. Each of these steps may for example include several machining operations. The skilled person also realizes that a single strategy may include several machining operations performed by different machine tools 110. By selecting between different strategies, one may not only influence the order in which machining operations are performed, but also the order in which the different machine tools 110 are employed, thus allowing a tradeoff between prioritized aspects such as tool life, surface quality or object manufacturing speed.

It will be appreciated that the database 170 may include strategies for machining many more geometric features than those shown in Fig. 3. It will also be appreciated that the tool path patterns 410 and 420 described above with reference to Fig. 4 are only intended as simple examples, and that other tool path patterns (for example including tool paths in three dimensions rather than tool paths in a plane as in Fig 4) may also be envisaged.

In one embodiment, a computer is adapted to generate instructions for causing the machine tools 110 to manufacture the object defined by the model 150 and the PMI 160. The computer is equipped with a user interface for user interaction. The user interface may for example be a human machine interface (HMI). The HMI may for example include a touch screen and one or more keys or buttons. The computer is adapted to select strategies from the database 170 and to generate instructions for the machine tools 110. Such tasks may for example be performed by one or more processors 182. The processors 182 may for example be digital processors.

In one embodiment, a system 180 comprising the computer above is provided.

The system 180 may for example be located at the machining site 100 in the form of a stationary or laptop computer, a tablet computer or a smart phone, equipped with suitable software. In other embodiments, the system 180 may for example be integrated as a part of one or more of the machine tools 110. Alternatively, the system 180 may be arranged at a remote location, or may be cloud-based. The system 180 may for example comprise the database 170. Embodiments may also be envisaged in which the database 170 is arranged at a remote location, or in which the database 170 is cloud-based.

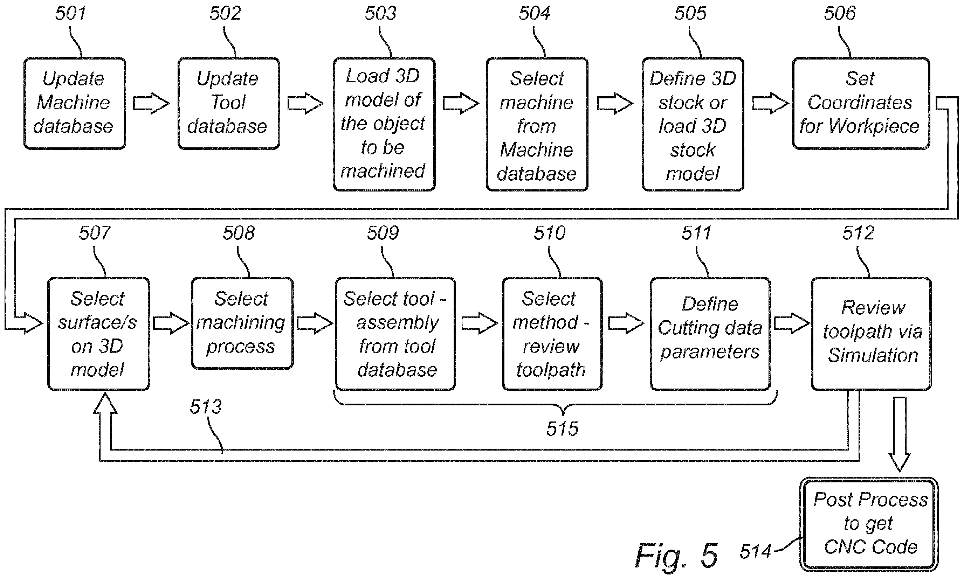

In one embodiment, which will be described below with reference to Fig. 5, the system 180 is implemented as a software application running on a tablet computer.

Operation of the system 180 will now be described with reference to Fig. 2.

**Fig. 2** shows a flow chart of a method 200 performed by the system 180 for providing instructions for causing the one or more machine tools 110 to manufacture the object via subtractive manufacturing. The method 200 comprising:

**Step 210:** receiving 210 user input indicative of prioritized aspects of manufacturing of an object, the prioritized aspects comprising tool life or surface quality or object manufacturing speed/time.

In one embodiment, the user input may be indicative of relative importance of the prioritized aspects of manufacturing of the object. In one example, an indication of a high number for tool life and indications of low numbers for surface quality and/or object manufacturing speed/time indicate that tool life is the most prioritized aspect of manufacturing the object. Indication of numbers may be performed by the user checking tick-boxes, moving sliders, pressing keys or in any other way interacting via the HMI.

In one embodiment, the user input is normalized and is indicative of a number in the range from 0 (zero) to 1 (one).

**Step 220:** obtaining a model of an object to be manufactured via subtractive manufacturing. In the present embodiment, the model may be a computer-aided design, CAD, model generated by a component designer at a remote computer, and the CAD model is received by the system 180. However, embodiments may also be envisaged in which the CAD model 150 is generated by the system 180, or by a user of the system 180. In one embodiment, the model further comprises PMI 160.

**Step 230:** identifying, based on the model, a geometric feature to be machined as part of manufacturing the object.

In one embodiment, the geometric feature is identified based on received user input.

In one example, the system displays the object and comprised geometric features on a display to the user and the user points at the geometric feature on the display. In other words user input indicative of an identified geometric feature is received.

In one embodiment, the geometric feature to be machined as part of manufacturing the object is identified 230 based on the model 150 via a computer-implemented algorithm. An identified geometric feature may for example constitute a portion of the object to be manufactured, or may be an intermediate shape to be machined before the final shape of the object may be machined. Several schemes for such automatic detection of geometric features (also referred to as feature recognition) are known in the art, and such schemes are therefore not described further herein.

**Step 240:** obtaining a plurality of strategies for machining the geometric feature 310, 320, 330, by accessing the database 170, the plurality of strategies defining alternative ways of machining the geometric feature;

The database 170 may be accessed 240 for each of the identified geometric features. The database 170 comprises strategies for machining different geometric features. As described above, example geometric features are shown in Fig. 3. The database 170 includes a plurality of strategies defining different ways of machining an identified geometric feature. Strategy characteristics indicative of each strategy's impact on the prioritized aspects of manufacturing of the object, such as tool life or surface quality or object manufacturing speed is associated and/or comprised in the plurality of strategies.

A strategy may e.g. include at least one of:
- a sequence of operations including for example facing, hole-making, and threading;
- one or more machine tools 110 for performing the manufacturing;
- one or more cutting tools 120 for use by the one or more machine tools 110,
- one or more work pieces 130,
- one or more fixtures 140 for holding the work piece 130; and
- tool paths for the one or more cutting tools 110.

The obtained strategy may also include use of cooling fluids for providing cooling during the machining or not.

The strategy may also include means for determining suitable cutting data based on the circumstances and/or suitable or proposed cutting data, such as feed rate, cutting speed, and depth of cut. The cutting data may for example be determined based on the material of the work piece 130, a tolerance e.g. set by the PMI 160, a selected or proposed tool path, and a selected or proposed cutting tool 120.

The plurality of strategies may in one embodiment be represented and/or stored in a graph data structure, such as a decision graph or Bayesian network.

**Step 250:** selecting at least one strategy from said plurality of strategies by ranking the plurality of strategies using the prioritized aspects of manufacturing and selecting at least one strategy having the highest ranking.

In one embodiment, each strategy of said plurality of strategies comprises associated strategy characteristics. The associated characteristics may be indicative of the impact of employing the strategy to of prioritized aspects of manufacturing of the object, such as tool life or surface quality or object manufacturing speed/time associated with the respective strategy.

In one example, further described in relation to Fig. 3, a geometric feature may comprise a surface comprising a hole. The user may have indicated that surface quality and manufacturing speed are the most prioritized aspects. The surface quality may be represented by a surface quality measure mainly relating to the surface quality of the hole. The surface quality measure may e.g. comprise tolerances of the surface.

Selecting a first strategy which forms the surface 311 after drilling the hole 312 may cause deformation of the hole 312 close to the surface 311. This strategy may thus have strategy characteristics indicative of a low surface quality and a fast object manufacturing speed.

On the other hand, selecting a second strategy which drills the hole 312 after forming the surface 311 may cause deformations (or damage) at the surface 311 close to where the drill enters the hole 312, possibly requiring further machining to obtained a desired surface quality.

In this example, the first strategy would be ranked first and selected, as it best represents the received user input indicative of prioritized aspects, i.e. surface quality and manufacturing speed in this example.

The surface quality may depend on the tolerances specified for the object to be manufactured, but also on the cutting tools 120 available for performing the machining. Some drills may for example cause more deformations to the surface 311 than others, so that an additional machining operation is required to remove the deformations caused by the drilling. In such cases, the first strategy (machining the hole 312 first) may be more suitable than the second strategy (machining the surface 311 first). Selection of a suitable strategy from the database 170 may therefore be further based on the available cutting tools.

The surface quality may further depend on an expected bending of the cutting tool or drill employed to make the hole 312, which may affect precision or surface quality of the object. Machining of the surface 311 first reduces the depth of the hole 312 to be drilled, which may affect how much the drill may bend and thus the strategy characteristics indicative of surface quality.

In a further example, if the strategy includes use of cutting tools in the form of short drills, it may be desirable to employ the second strategy (machining the surface 311 first), since machining of the surface 311 first reduces the depth of the hole 312 to be drilled so that the short drill reaches far enough to make the hole. In other words, the characteristics of this strategy indicates that it should be ranked higher, e.g. would be ranked first and selected, as it best represents the receiving user input indicative of prioritized aspects.

In one non-limiting example, the plurality of strategies is stored in a graph data structure, where each node in the graph represents a partial selection of a strategy and any further possible partial selection are represented by joints or a selection of alternatives, e.g. of alternative tool-paths etc. Each alternative is are associated with a triplet of numbers indicative of how much this alternative contributes to the prioritized aspects of manufacturing of the object, e.g. (0.2, 0.5, 0.7) if toolpath 410 in Fig. 4 is selected and (0.1, 0.6, 0.4) if tool path 420 in Fig. 4 is selected. The total strategy characteristics may then be obtained by adding all triplets for each selected alternative. The plurality of strategies may then be ranked using the prioritized aspects of manufacturing using the total strategy characteristics.

**Step 260:** providing, based on the at least one selected strategy, instructions for causing the one or more machine tools 110 to manufacture the object via subtractive manufacturing.

The system 180 may for example comprise a machine code generator 183 for generating the instructions for the machine tool 110 (or the instructions may be generated by the one or more processors 182). The instructions for the machine tool 110 may for example be provided in the form of CNC code.

Optionally, a computer simulation (not shown in Fig. 2) is further performed to evaluate the selected strategies before instructions executable by the machine tools 110 are generated. The simulation 260 may for example be performed to check one or more of the following:
- That selected cutting tools 120 are available when needed;
- That collisions are avoided;
- That the selected cutting tools 120 reach the intended volumes so that they are able to cut where intended;
- That the machined surface quality is within the prescribed tolerances when finished;
- That tool wear/tool life is acceptable;
- That the manufacturing time/speed is acceptable.

The simulation may for example be performed by one or more processors comprised in the system 180. The result of the simulation may for example be provided to a user via a display 181. The simulation may be employed by the user to determine which of the selected strategies to employ for generating machine tool instructions.

In a first example scenario, the system 180 selects four strategies for machining a geometric surface. During the simulation, the performance of these selected strategies is evaluated, so that the user may select between them at the user interaction step. The simulation may for example reveal that one of the strategies is unsuitable due to collisions, while other strategies appear to work. Factors such as manufacturing time, tool wear and precision may be evaluated via the simulation, and the user may make a suitable tradeoff to select one of the strategies. The user-selected strategy may then be employed to generate machine tool instructions.

An optional user interaction step may allow the user to influence which of the selected strategies to employ, or whether to modify (or change) the selected strategies. The user interaction may be provided in the form of user instructions received via a user interface. The user interface may for example be a touch screen 181. The user interaction will be described further below.

In one embodiment, wherein at least two strategies are selected, the method further comprising receiving user instructions; and selecting, based on the user instructions, one strategy from the at least two strategies, wherein the instructions are provided based on the selected one strategy.

In some situations, the user have further information regarding machining the object, not available to the system. The user may therefore, after the strategy has been selected, further optimize or improve the selected strategy to improve the match to indicated prioritized aspects.

In one example, the strategy may further be optimized or improved by adjusting cutting data by the user based on such further information, for example based on experience from machining similar objects or from similar machining conditions.

In one embodiment, the at least one selected strategy comprises a proposed cutting tool, a proposed tool path pattern, and proposed cutting data, and the method further comprises adapting a selection of any of the proposed cutting tool, the proposed tool path pattern and the proposed cutting data based on the prioritized aspects.

In one embodiment, the proposed cutting tool, the proposed tool path pattern and the proposed cutting data is adapted based on further user input provided by the user.

In one example, the user may want to adapt the tool path pattern and select a different tool path, e.g. based on experience.

In one embodiment, the proposed cutting tool, the proposed tool path pattern and the proposed cutting data is adapted based on the indicated prioritized aspects of manufacturing of an object using an algorithm, e.g. an optimization algorithm.

In one example, the system adapts a tool path of the selected strategy, as this will further improve the strategy characteristics in relation to the indicated prioritized aspects of manufacturing of an object. E.g. selecting a tool path that reduces manufacturing speed/time when this indicated as the most prioritized aspect.

In some embodiments, the plurality of strategies are limited to strategies compatible with machine tools 110 available for manufacturing the object, typically machines available at the machining site 100.

In one embodiment, the method 200 further comprises obtaining information comprising information about one or more machine tools 110 available for manufacturing the object; and obtaining the plurality of strategies only for the one or more machine tools 110. The information may be obtained from the database 170, typically from the machine tool database as previously described. In one embodiment, the method further comprises receiving 504 user input indicative of a machine tool of the one or more machine tools 110 available for manufacturing the object. The plurality of strategies may then be ranked further or excluded using the indicated machine tool.

In one example, only strategies possible to perform using available machine tools 110 at the machining site 100 are obtained or are ranked higher when selecting the strategy.

In some embodiments, the plurality of strategies are limited to strategies compatible with cutting tools 120 available for manufacturing the object using constraints, the constraints may typically be indicative of cutting tools 120 available at the machining site 100.

In one embodiment, the method 200 further comprises obtaining information comprising information about one or more cutting tools 120 available for use by one or more machine tools to manufacture the object; and obtaining the plurality of strategies only for or compatible with the one or more cutting tools 120. The information may be obtained from the database 170, typically from the cutting tool database as previously described.

In one embodiment, the method further comprises receiving 508 user input indicative of a machining process, wherein the plurality of strategies are limited by constraints indicative of the indicated machining process and/or ranked further using the indicated machining process. The machining process may be e.g. face milling, cavity or drilling.

In one embodiment, the method further comprises receiving 509 user input indicative of a cutting tool 120 or a cutting tool assembly, wherein the plurality of strategies are limited by constraints indicative of the indicated cutting tool 120 and/or ranked further using the indicated cutting tool 120.

In one embodiment, the method further comprises receiving 510 user input indicative of a method for performing the selected machining operation, wherein the plurality of strategies are limited by constraints indicative of the indicated method for performing the selected machining operation and/or ranked further using the indicated method for performing the selected machining operation.

In one embodiment, the method further comprises receiving 511 user input indicative of cutting data, wherein the plurality of strategies are limited by constraints indicative of the indicated cutting data and/or ranked further using the indicated cutting data.

In one example, information is obtained about the manufacturing site and the available equipment, so that a suitable machining strategy may be selected.

The obtained information may include information (which may be referred to as machine tool information) about the one or more machine tools 110 available for manufacturing the object and/or information (which may be referred to as cutting tool information) about the one or more cutting tools 120 available for use by the one or more machine tools 110 to manufacture the object.

The obtained information may also include information (which may be referred to as fixture information) about the one or more fixtures 140 available for holding a work piece 130 at the one or more machine tools 110 during manufacturing of the object. The obtained information may for example also include information about the material of the work piece 130 from which to machine the object. The work piece material typically affects the selection of which cutting tools 120 and cutting data to employ for the machining. In other words, the constraints may be used to limit the plurality of strategies to strategies compatible with the selected fixture 140 and or the selected work piece 130.

The obtaining 220 of information may be automatic, or may involve various degrees of interaction with the user of the system 180. Some of the obtained information may for example be predefined, and may not need to be retrieved. In the present embodiment, the system 180 retrieves the machine tool information from the database 170, such as the machine tool database (not shown), which keeps track of the available machine tools 110 and their properties. Alternatively, the system 180 may receive the machine tool information from the machine tools 110 themselves, for example via wireless communication.

The system 180 may optionally inform the user of the automatically retrieved information, which may include a list of the available machine tools 110. The user may then be asked to confirm that the retrieved information is correct, or be asked to correct the information. The user may for example add or remove machine tools 110 from a list. The user interaction may for example be performed by clicking on a touch screen 181.

Embodiments may also be envisaged in which the user enters the information manually. The system 180 may for example present a list of machine tools 110 and the user may select the available machine tools 110 from the list.

In one embodiment, the system 180 retrieves the information from a database comprised in a tool management system, which keeps track of the cutting tools 120 available for use by the machine tools 110. Alternatively, the system 180 may receive the information from the cutting tools 120 themselves, for example via wireless communication.

The system 180 may inform the user of the automatically retrieved information, which may include a list of the available cutting tools 120. The user may be asked to confirm that the retrieved information is correct, or to correct the information. The user may for example add or remove cutting tools 120 from a list. The user interaction may for example be performed by clicking on a touch screen 181. Embodiments may also be envisaged in which the user enters the information manually. The system 180 may for example present a list of cutting tools 120 and the user may select the available cutting tools 120 from the list.

In the present embodiment, the system 180 retrieves the information from a database, e.g. a fixture database. Alternatively, the system 180 may receive the information from the fixtures 140 themselves, for example via wireless communication. The system 180 informs the user of the information retrieved, which may include a list of the available fixtures 140. The user is asked to confirm that the retrieved information is correct, or to correct the information. The user interaction may for example be performed by clicking on a touch screen 181. Embodiments may also be envisaged in which the user enters the information manually. The system 180 may for example present a list of fixtures 140 and the user may select the available fixtures 140 from the list.

The system 180 may for example obtain further information about the machining site 100 and the available equipment. If some information needed to select suitable machining strategies from the database 170 is missing, the system 180 may for example prompt the user to enter the missing information via a user interface 181 such as a HMI.

The obtained information may for example indicate which types of cutting tools 120 and/or fixtures 140 that are compatible with the machine tools 110. The obtained information may for example indicate other properties of the machine tools 110, such as maximal rotation speeds or maximal torques for spindles of the machine tools 110, how the machine tools 110 can move or rotate the cutting tools 120 and the work piece 130 relative to each other.

The obtained information may further be indicative of the constraints provided by the machining site 100 on which of the stored strategies are actually suitable to employ. Such constrains may also be affected by the tolerances specified in the PMI, as well as the material of the work piece 130 and the starting shape of the work piece 130.

An advantage of the present disclosure is that the system 180 helps the user, e.g. by presenting a plurality of selected and/or proposed strategies for how to machine an identified geometric feature of the object, thereby reducing a very complicated process planning task into a selection between one or more selected strategies. Note that the selected strategies are not necessarily optimal (in many cases, finding the optimal strategy is practically impossible since the space of possible solutions is so large), but they serve as examples of possible solutions matching the prioritized aspects of manufacturing.

A further advantage of the present disclosure is that complexity of manufacturing can be reduced. When the machine tool instructions have been generated, these instructions may be conveyed to the machine tools 110 so that the object defined by the CAD model 150 may be manufactured. In other words, a user having a CAD model 150 of an object, and associated PMI 160, may employ the system 180 to generate instructions for the machine tools 110, so that the machine tools 110 may manufacture the object. Hence, the user does not need any CAM software or CAM programming skills to be able to manufacture the object.

Further advantages of the present disclosure is illustrated in the following example scenario. In this example, a single strategy is selected by the system 180. The user or an optional simulation reveals a problem with the selected strategy. The user may then adapt a selection of any of a proposed cutting tool 120, a proposed tool path pattern and proposed cutting data based on the prioritized aspects. The user may for example reduce the cutting depth to reduce tool wear, or increase the cutting depth to reduce manufacturing time and thus increase manufacturing speed. The user may for example adapt a tool path that is undesirable for some reason.

In a further example scenario, a plurality of strategies is selected by the system 180. The user detects (with or without use of a computer simulation) that all the selected strategies involve use of a certain cutting tool 120. The user would like to avoid that particular cutting tool 120, and therefore provides user input/instructions indicating that the cutting tool 120 should be avoided. The system 180 receives the user input, and may then adapt the constraints and/or ranking of the plurality of strategies or repeat the steps of obtaining 240 a plurality of strategies and selecting 250 at least one strategy from said plurality of strategies using a constraint that a certain cutting tool 120 should be avoided/excluded.

In one embodiment, a system 180 is provided and configured to perform any of the method steps described herein.

In one embodiment, an object manufacturing system comprising the system 180 is provided and configured to perform any of the method steps described herein.

In one embodiment, a computer program comprising computer-executable instructions for causing a system, when the computer-executable instructions are executed on a processing unit comprised in the system, to perform any of the method steps described herein.

In one embodiment, a system 180 configured to:
receive user input indicative of prioritized aspects of manufacturing of an object, the prioritized aspects comprising tool life or surface quality or object manufacturing speed;
obtain a model of an object to be manufactured via subtractive manufacturing;
identify, based on the model, a geometric feature to be machined as part of manufacturing the object;
obtain a plurality of strategies for machining the geometric feature 310, 320, 330, by accessing a database, the plurality of strategies defining alternative ways of machining the geometric feature;
select at least one strategy from said plurality of strategies by ranking the plurality of strategies using the prioritized aspects of manufacturing and selecting at least one strategy having the highest ranking,
provide, based on the at least one selected strategy, instructions for causing the one or more machine tools 110 to manufacture the object via subtractive manufacturing.

In one embodiment, a machine tool 110 comprising the system is provided. In one embodiment, the machine tool is a numerically controlled machine tool, and wherein instructions provided to the machine tool is based on a selected strategy of a plurality of strategies and include machine code executable by the machine tool.

**Fig. 5****.** shows a flow chart illustrating an example of how a user may employ the system according to one or more embodiments described herein.

In the present example, the system 180 is implemented as a software application (or computer program) running on a tablet computer 180. Information is presented to the user via a touch screen 181 and the user enters information and instructions via the touch screen 181. However, embodiments may also be envisaged in which the user employs other input means, such as a keyboard and a pointing device, for example a mouse.

A machine tool database, e.g. comprised in the database 170, keeps track of the machine tools 110 available at the machining site 100 and their properties. The machine tool database also includes information regarding how to generate CNC code suitable for controlling the respective machine tools 110. Similarly, a cutting tool database, e.g. comprised in the database 170, keeps track of the cutting tools 120 available at the machining site 100 and their properties. The information stored in the cutting tool database may for example include parameters employed for determining suitable cutting data and/or tool paths for the respective cutting tools 120. The database 170 and/or the machine tool database and/or the cutting tool database may be stored locally in the tablet computer 180 or may be stored at a server which is accessed via the internet. The machine tool database and/or the cutting tool database may be implemented as separate databases or be comprised in the database 170.

When the user has started up the program and logged into an account, the user may optionally be prompted to update 501 the machine tool database. If the machine tool database is already up to date, then the user can proceed directly to the next step. Otherwise, the user may optionally ignore the prompting, enter information regarding new machine tools 110 and/or updates information regarding machine tools 110 already in the database. The user may for example select new machine tools 110 from a list of machine tools 110 available on the market. Information about the new machine tools 110 may for example be entered manually by the user, or may be retrieved automatically and stored in the machine tool database.

The user may also be prompted to update 502 the cutting tool database. If the cutting tool database is already up to date, then the user can proceed directly to the next step. Otherwise, the user may optionally ignore the prompting or enter information regarding new cutting tools 120 (or new cutting tool assemblies) and/or updates information regarding cutting tools 120 (or cutting tool assemblies) already in the database. The user may for example select new cutting tools 120 from a list of cutting tools 120 available on the market. Information about the new cutting tools 120 may for example be entered manually by the user, or may be retrieved automatically and stored in the cutting tool database.

User input indicative of prioritized aspects of manufacturing of an object is then received (Not shown). Typically the user input is an indication of a balance or tradeoff of aspects comprising tool life or surface quality or object manufacturing speed. The user may be prompted to provide an indication of a number for tool life and/or for surface quality and/or object manufacturing speed/time, e.g. via slide bars or other means to indicate the priority of the aspects.

A model, e.g. a 3D model, of the object to be machined is obtained, e.g. loaded 503 from the database 170. The 3D model may be a CAD model, for example in the form of a STEP file. The CAD model may include product and manufacturing information (PMI). Alternatively, product and manufacturing information (PMI) may be provided separate from the CAD model. However, other formats could also be employed for the 3D model. The 3D model may be retrieved from a database of stored models, or may be provided by the user.

Optionally a list of available machine tools 110 is presented to the user, and the user simply clicks on the machine tool 110 to be used. In other words, the user is prompted to select 504 a machine tool 110 from the machine tool data base. The selected machine tool is then used as a constraint when searching for suitable strategies. The selected machine tool is then optionally used as a constraint when searching for suitable strategies in the database. In other words, only strategies using the selected machine tool are later included when obtaining the plurality of strategies from the database 170.

Optionally, a 3D stock model is defined 505 or loaded into the program. The stock model may for example be defined manually by the user, or may be selected by the user from a database of available stock models. The stock model may be defined via a STEP file, and may include material class and hardness. However, other formats could also be employed for the stock model. The stock model defines the work piece 130 from which the object will be machined.

The selected 3D stock model is then optionally used as a constraint when searching for suitable strategies in the database. In other words, only strategies supporting the work piece 130 defined by the 3D stock model are later included when obtaining the plurality of strategies from the database 170.

Optionally, coordinates for the work piece may then be set 506. These coordinates serve as reference for the coordinate system of the machine tool 110.

A geometric feature to be machined as part of manufacturing the object is then identified 230, based on the model. The user may be presented with a visual representation of the object to be manufactured, represented by the model, where the object can be rotated to be viewed from different angles. The geometric features (or surfaces) of the object are selected 507 or identified 230/507 in the visual representation by clicking on them. The selected feature typically becomes highlighted.

Optionally the user is prompted to select 508 which machining process to employ for machining the geometric feature. A list of proposed machining processes (such as face milling, cavity, drilling) is presented and the user selects one by clicking on it. The selected machining process is then optionally used as a constraint when searching for suitable strategies in the database. In other words, only strategies using the selected machining process are later included when obtaining the plurality of strategies from the database 170.

Optionally, the user is then prompted to select 509 a cutting tool 120 (or a cutting tool assembly). The user is presented with a list of suitable cutting tools 120 from the cutting tool database, and may select one by clicking on it. The selected 509 cutting tool 120 is then optionally used as a constraint when searching for suitable strategies. In other words, only strategies using the selected cutting tool are later included when obtaining the plurality of strategies from the database 170.

Optionally, the user is then prompted to select 510 a method for performing the selected machining operation. The user is presented with a list of proposed methods involving different types of tool path patterns such as parallel or circular patterns (such as the example patterns shown in Fig. 4). The proposed methods also include feed direction (one way or bidirectional). As described above, the display 181 shows the object to be manufactured, and highlights the selected geometric feature. The selected tool path pattern may be shown at the selected geometric feature so that the user can get a rough view of how the cutting tool 120 will move when machining the geometric feature. This provides the user with an easy way to review the outcome of the selections made for machining of the geometric feature. The selected 510 method for performing the selected machining operation is then optionally used as a constraint when searching for suitable strategies. In other words, only strategies using the selected method are later included when obtaining the plurality of strategies from the database 170.

Optionally, the user is prompted to define 511 cutting data such as cutting speed, feed speed, spindle speed, and feed per tooth. The user may also select whether to employ coolant, and whether to employ an internal or external coolant. The user may enter these things via the touch screen 181. The selected 511 cutting data is then optionally used as a constraint when searching for suitable strategies. In other words, only strategies using the selected cutting data are later included when obtaining the plurality of strategies from the database 170.

A plurality of strategies for machining the identified geometric feature is then obtained, typically by accessing the database 170. Optionally the database 170 is accessed further using the constraints. The plurality of strategies defines alternative ways of machining the identified geometric feature. The strategies may be indicative of a selection of machining process, tool assembly/cutting tool, method for performing the selected machining operation and cutting data parameters.

At least one strategy, from said plurality of strategies, is then selected. The selection is performed by ranking the plurality of strategies using strategy characteristics of each strategy indicative of the prioritized aspects of manufacturing. At least one strategy having the highest ranking is then selected. The selection may be performed automatically or after presentation of a ranked list of strategies to the user and an indication/confirmation by the user.

In other words, by selecting a strategy, the user is provided with a proposed set of machining parameters 515 including a selection of any of a proposed cutting tool 120, a proposed method for performing the selected machining operation and proposed cutting data. Thus manual interaction with the user, such as manual steps 509, 510, 510 can be eliminated.

As described previously, optionally the strategy further includes a selection of proposed machine tool, a proposed cutting tool, a proposed fixture and a proposed work piece.

Optionally, a computer simulation is then performed for the machining of the selected geometric feature, so that the user may review the tool path on the display.

Optionally, the method further comprises, after the selection of a strategy, adapting the selected strategy by adapting a selection of any of the tool assembly/cutting tool, the tool path pattern and the cutting data proposed by the strategy based on the prioritized aspects. This adaption may be performed via user input, in a similar manner to what is described above in relation to steps 509, 510, 511. Alternatively the adaption is performed automatically using an optimization algorithm and the constraints described herein.

In one example, cutting data may be further adjusted by the, for example based on experience from previously machining similar objects or from similar machining conditions.

The user may select 507 further geometric features one by one, and any of the steps above are repeated 513 for each selected geometric feature.

When all steps above have been completed, instructions for causing the one or more machine tools 110 to manufacture the object via subtractive manufacturing is provided based on the at least one selected strategy. In other words, the software application performs a post processing step 514 where it generates CNC code for controlling the machine tool 110 to machine the object in accordance with the selected strategy and any other further selections made by the user. The executable CNC code is then transferred to the machine tool 110 for manufacturing of the object. The CNC code could for example be transferred from the tablet computer 180 to the machine tool 110 via a wireless connection. Alternatively, the CNC code could be transferred from the tablet computer 180 to the cloud (or to a server via the internet), and then from the cloud to the machine tool 110 (or from the server to the machine tool 110 via the internet).

As described above, the method of the present disclosure may assist the user in machining the object, e.g. by proposing suitable cutting tools 120 and suitable tool path patterns. However, the strategies in the database 170 may be employed by the program to assist the user even further. In one example, the user has selected 507 a geometric feature and has selected 508 a machining process, the program may further propose suitable machine tools 110 and/or suitable cutting tools 120. As mentioned above, the selected strategy 515 may include a proposed cutting tool 120, a proposed tool path pattern, and proposed cutting data. The user is simply provided with and/or simply selects a strategy 515 among one or more strategies proposed by the program, and gets suggestions from the program for how to perform the machining. In other words, by selecting a strategy, the steps of selecting 509 a cutting tool 120 (or a cutting tool assembly), selecting 510 a method for performing the selected machining operation, and defining 511 cutting data are combined into one single selection step based on prioritized aspects of manufacturing of the object. The user may optionally review the cutting tool 120, the tool paths and the cutting data proposed by the selected strategy 515 in a simulation, and may modify or adapt these if needed. In some cases, the user may for example wish to replace the tool path pattern and/or the cutting data proposed by the strategy.

The software application described above with reference to Fig. 5 is advantageous in several different scenarios. In a first scenario, the user would like to manufacture an object as soon as possible with the currently available equipment. The software application then guides the user through the steps described above, and generates CNC code or machine code for manufacturing the object. The CNC code is transmitted from the tablet computer 180 held by the user to the machine tool 110 so that the machine tool 110 can manufacture the object. In this scenario, the software application only proposes use of strategies and cutting tools 120 currently available to the user, so that the machining can be performed straight away.

In a second scenario, the user is planning ahead for future manufacturing. In this scenario, the software application may propose acquiring cutting tools 120 and/or associated strategies which would better match prioritized aspects of manufacturing of the object, e.g. improve quality of the machined object, or may reduce manufacturing time and/or costs. Rather than only proposing use of cutting tools 120 and strategies currently available to the user (such as cutting tools 120 available at the machining site, and strategies already in the database 170), the software application may indicate to the user improvements that are possible if new cutting tools 120 and/or new strategies are acquired.

It will be appreciated that the software application described above with reference to Fig. 5 can be employed for generating CNC code suitable for different machine tools 110, not only for machine tools 110 from a certain manufacturer or for machine tools of a certain type.

The person skilled in the art realizes that the present invention is by no means limited to the preferred embodiments described above. On the contrary, many modifications and variations are possible within the scope of the appended claims. For example, many different geometric features than those shown in Fig. 3 may be covered by the database 170. Further, it will be appreciated that the cutting tool patterns shown in Fig. 4 merely serve as an example, and that many other tool path patterns may be envisaged. It will be appreciated that the machining site 100 depicted in Fig. 1 is a simplified example. For example, Fig. 1 only shows a single machine tool 110, a single cutting tool 120, and a single fixture 140, while a real machining site may typically include several available machine tools 110, cutting tools 120, and fixtures 140.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

The computer program described herein may for example be provided in a computer program product. In other words, a computer program product may comprise a computer-readable medium with instructions which, when the instructions are executed by a computer (or by a processor comprised in the computer), cause the computer to perform the method of any one of the embodiments of the first aspect. The computer-readable medium may for example be a transitory computer-readable medium (such as a signal or wave carrying the instructions from a transmitter to a receiver) or a non-transitory computer-readable medium (such as a storage medium or memory on which the instructions are stored). Further examples of transitory computer-readable media include an electronic signal, an optical signal, and a radio signal.

It will be appreciated that a processor 182 (or processing circuitry) may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide computer functionality, either alone or in conjunction with other computer components (such as a memory or storage medium).

It will also be appreciated that a memory or storage medium (or a computer-readable medium) may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by a processor or processing circuitry.

Finally, it should be understood that the invention is not limited to the embodiments described above, but also relates to and incorporates all embodiments within the scope of the appended independent claims.

## Claims

1. A method (200) comprising:
receiving (210) user input indicative of prioritized aspects of manufacturing of an object, the prioritized aspects comprising tool life or surface quality or object manufacturing speed;
obtaining (220) a model of an object to be manufactured via subtractive manufacturing;
identifying (230), based on the model, a geometric feature to be machined as part of manufacturing the object;
obtaining (240) a plurality of strategies for machining the geometric feature (310, 320, 330), by accessing a database, the plurality of strategies defining alternative ways of machining the geometric feature;
selecting (250) at least one strategy from said plurality of strategies by ranking the plurality of strategies using the prioritized aspects of manufacturing and selecting at least one strategy having the highest ranking,
providing, (260) based on the at least one selected strategy, instructions for causing the one or more machine tools (110) to manufacture the object via subtractive manufacturing.

2. The method according to claim 1, wherein at least two strategies are selected, the method further comprising:
receiving user instructions; and
selecting, based on the user instructions, one strategy from the at least two strategies,
wherein the instructions are provided based on the selected one strategy.

3. The method according to any of the preceding claims, wherein the at least one selected strategy comprises a proposed cutting tool 120, a proposed tool path pattern, and proposed cutting data, and the method further comprises adapting a selection of any of the proposed cutting tool 120, the proposed tool path pattern and the proposed cutting data based on the prioritized aspects.

4. The method according to any of the preceding claims further comprising:
obtaining information comprising information about one or more machine tools (110) available for manufacturing the object; and
obtaining the plurality of strategies only for the one or more machine tools (110).

5. The method according to claim 4, further comprising:
receiving (504) user input indicative of a machine tool of the one or more machine tools (110) available for manufacturing the object,
wherein the plurality of strategies are ranked further using the indicated machine tool.

6. The method according to any of the preceding claims further comprising:
obtaining information comprising information about one or more cutting tools (120) available for use by one or more machine tools to manufacture the object; and
obtaining the plurality of strategies only for the one or more cutting tools (120).

7. The method according to claim 6, further comprising:
receiving (508) user input indicative of a machining process,
wherein the plurality of strategies are ranked further using the indicated machining process.

8. An object manufacturing system configured to perform the method according to any of claims 1-7.

9. A computer program comprising computer-executable instructions for causing a system, when the computer-executable instructions are executed on a processing unit comprised in the system, to perform any of the method steps according to claims 1-7.

10. A system (180) configured to:
receive user input indicative of prioritized aspects of manufacturing of an object, the prioritized aspects comprising tool life or surface quality or object manufacturing speed;
obtain a model of an object to be manufactured via subtractive manufacturing;
identify, based on the model, a geometric feature to be machined as part of manufacturing the object;
obtain a plurality of strategies for machining the geometric feature (310, 320, 330), by accessing a database, the plurality of strategies defining alternative ways of machining the geometric feature;
select at least one strategy from said plurality of strategies by ranking the plurality of strategies using the prioritized aspects of manufacturing and selecting at least one strategy having the highest ranking,
provide, based on the at least one selected strategy, instructions for causing the one or more machine tools (110) to manufacture the object via subtractive manufacturing.

11. A machine tool (110) comprising the system according to claims 8 or 10.

12. The machine tool (110) according to claim 11, wherein the machine tool is a numerically controlled machine tool, and wherein instructions provided to the machine tool is based on a selected strategy of a plurality of strategies and include machine code executable by the machine tool.
